Europäisches Patentamt

European Patent Office

Office européen des brevets

(19)

(11) **EP 1 662 307 A1**

(12) **EUROPEAN PATENT APPLICATION**
published in accordance with Art. 158(3) EPC

(43) Date of publication:
**31.05.2006 Bulletin 2006/22**

(51) Int Cl.:
*G02F 2/02* (1974.07)    *G02F 1/365* (2000.01)

(21) Application number: **04771572.7**

(22) Date of filing: **12.08.2004**

(86) International application number:
**PCT/JP2004/011597**

(87) International publication number:
**WO 2005/019922 (03.03.2005 Gazette 2005/09)**

(84) Designated Contracting States:
**DE GB**

(30) Priority: **21.08.2003 JP 2003297330**

(71) Applicant: **NEC CORPORATION**
**Minato-ku,**
**Tokyo 108-8001 (JP)**

(72) Inventor: **NAKAMURA, Shigeru,**
**c/o NEC CORPORATION**
**Tokyo 108-8001 (JP)**

(74) Representative: **Glawe, Delfs, Moll**
**Patentanwälte**
**Postfach 26 01 62**
**D-80058 München (DE)**

(54) **COMPLETE LIGHT SWITCH**

(57)    In a Mach-Zehnder optical circuit that has a 3 dB coupler 10 whereby an NRZ light signal 53 inputted to an input port 7 is distributed to both arms of the circuit, a 3 dB coupler 3 whereby CW light 52 inputted to an input port 8 is distributed to both of the arms, and a 3 dB coupler 4 for synthesizing the light that has passed through both arms, the two arms of the circuit have nonlinear waveguide elements 1 and 2 whereby the refractive index is caused to change in nonlinear fashion and create a nonlinear shift in the phase of the inputted CW light when each NRZ signal distributed by the 3 dB coupler 10 is inputted, and further have variable attenuators 12 and 13 whereby the NRZ light signal inputted to the nonlinear waveguide element 2 is attenuated below the level of the NRZ light signal inputted to the nonlinear waveguide element 1. Furthermore, a variable delay circuit 11 is provided for causing the NRZ light signal to be inputted to the nonlinear waveguide element 2 after the NRZ light signal is inputted to the nonlinear waveguide element 1, and the time by which the input of the NRZ light signal is delayed by the variable delay circuit 11 is made shorter than the relaxation time of the change in the nonlinear refractive index in the nonlinear waveguide elements 1 and 2.

FIG.1

**Description**

TECHNICAL FIELD

The present invention relates to an all-optical switch used in a wavelength converter in the fields of fiber-optic communication and optical information processing.

BACKGROUND ART

Techniques are actively being developed for performing signal processing in the optical region without the use of photoelectric conversion in order to rapidly enhance the transmission capacity or operating efficiency of fiber-optic communication systems. An all-optical switch is necessary for processing signals in the optical region. Expectations are particularly high for a wavelength converter that can provide wavelength cross-connection capability in the nodes of a fiber-optic communication system.

There are known all-optical switches in which high speed is additionally provided based on an operating principle that makes use of high-efficiency nonlinear optical effects obtained by exciting resonance in a semiconductor optical amplifier (Semiconductor Optical Amplifier; SOA), and in which the SOA is incorporated into a Mach-Zehnder optical circuit. Such switches have been proposed as all-optical switches driven by a return-to-zero (Return to Zero; RZ) data-modulated optical signal (see Patent documents 1 to 4 and non-Patent document 1 for example). Such all-optical switches will be referred to hereinafter as Prior Art 1.

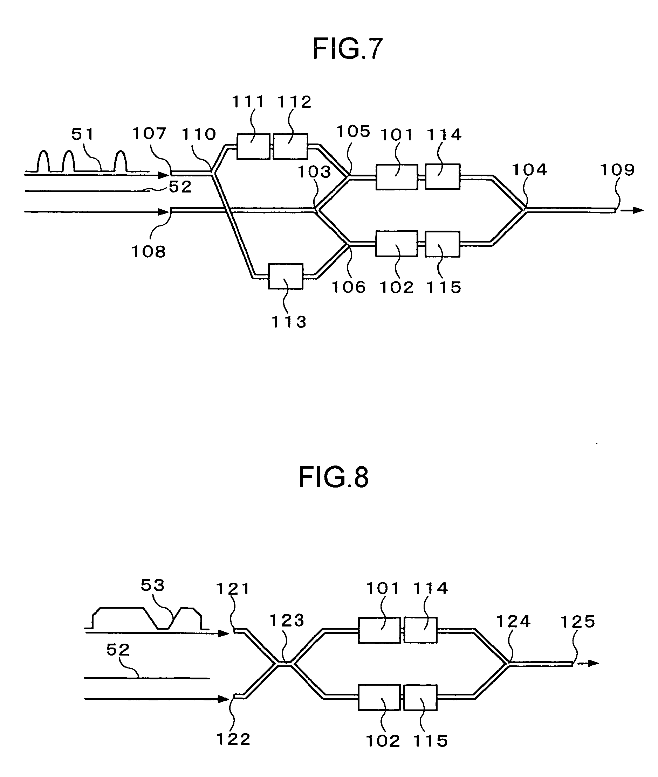

FIG. 7 is a diagram showing the structure of an all-optical switch of Prior Art 1. As shown in FIG. 7, the all-optical switch of Prior Art 1 has nonlinear waveguide elements 101 and 102, each of which is provided with an SOA and which are arranged in the two light paths (also referred to as arms hereinafter) of a Mach-Zehnder optical circuit. A light signal (RZ light signal) 51 in the form of a return-to-zero data-modulated pulse, and unmodulated continuous (Continuous Wave; CW) light 52 are inputted to this all-optical switch. In the process, the wavelength $\lambda_1$ of the RZ light signal 51 and the wavelength $\lambda_2$ of CW light 52 are set in the gain range of the SOA. After the light signal pulse is inputted from a port 107 and bifurcated by a 3 dB coupler 110, one branch thereof passes in sequence through a variable delay circuit 111, a variable attenuator 112, and a 3 dB coupler 105 and is inputted to the nonlinear waveguide element 101. Or, the other branch thereof passes in sequence through a variable attenuator 113 and a 3 dB coupler 106 and is inputted to the nonlinear waveguide element 102. The aforementioned two paths are shown in FIG. 7 as having different optical path lengths, but this is only for convenience in the drawing.

By adjusting the variable delay circuit 111 in this all-optical switch, a time difference can be provided between the RZ light signal inputted to the nonlinear waveguide element 101 and the RZ light signal inputted to the nonlinear waveguide element 102. In the nonlinear waveguide elements 101 and 102 in a state of population inversion, the RZ light signal 51 reduces the carrier density by stimulated emission and changes the refractive index of the nonlinear waveguide elements 101 and 102. On the other hand, once CW light 52 having wavelength $\lambda_2$ has been inputted to an input port 108 and bifurcated by a 3 dB coupler 103, CW light 52 receives the change in refractive index (nonlinear phase shift) that occurs in the nonlinear waveguide elements 101 and 102. CW light 52 that has passed through the nonlinear waveguide elements 101 and 102 is converted to an RZ data-modulated light signal by being re-multiplexed in a 3 dB coupler 104, and is outputted as wavelength-converted light from an output port 109.

In this type of Mach-Zehnder optical circuit, setting is performed using phase adjusters 114 and 115 so that output light in the form of a pulse having wavelength $\lambda_2$ originating from CW light 52 is not outputted from the output port 109 when an RZ light signal 51 having wavelength $\lambda_1$ is not inputted. Specifically, when an RZ light signal 51 having wavelength $\lambda_1$ is not inputted, setting is performed so that the phase difference is equal to half the wavelength when CW light 52 having wavelength $\lambda_2$ that has passed through both arms interferes in the 3 dB coupler 104. When an RZ light signal 51 is inputted, and a change in the nonlinear refractive index occurs in the nonlinear waveguide element 101, CW light 52 that has wavelength $\lambda_2$ and passes through the nonlinear waveguide element 101 undergoes a nonlinear phase shift, and the optical output having wavelength $\lambda_2$ from the output port 109 changes to the ON state.

The process of stimulated emission in which the RZ light signal attenuates the carrier density in the nonlinear waveguide elements 101 and 102 continues only for the approximately pulse width of the RZ light signal 51. Therefore, the time needed for the change in the carrier density or in the nonlinear refractive index to rise is approximately equal to the pulse width of the RZ light signal 51. In contrast, the relaxation time of the change in the nonlinear refractive index; specifically, the carrier life for returning to the original state of population inversion, is usually 100 ps to 1 ns, which is long. However, in the all-optical switch of Prior Art 1, the RZ light signal 51 is inputted to the nonlinear waveguide element 101, after which a time $\Delta T$ approximately equal to the pulse width of the RZ light signal 51 elapses. RZ light signal is then inputted to the nonlinear waveguide element 102, and a change in the nonlinear refractive index is caused, whereby switching operation is performed that does not depend on a long carrier life. CW light 52 that has wavelength $\lambda_2$ and passes through both arms of the Mach-Zehnder optical circuit also undergoes a nonlinear phase shift and interferes in the 3 dB coupler 104. The phase difference is thereby returned at this time to the half wavelength of the initial state, and the light output having wavelength $\lambda_2$ from the output port 109 changes to the OFF state. In other words, the light output having wavelength $\lambda_2$ is converted to RZ data-modulated light having a pulse width of $\Delta T$. Wavelength conversion is thus performed to input a pulse train of an RZ light signal 51 having wavelength $\lambda_1$ and to obtain a pulse train of data-modulated light having wavelength $\lambda_2$.

An all-optical switch that is driven by a non-return-to-zero (Non Return to Zero; NRZ) data-modulated optical signal has also been proposed in the past (for example, see non-Patent document 2). This all-optical switch is referred to hereinafter as Prior Art 2. FIG. 8 is a diagram showing the structure of the all-optical switch of Prior Art 2. As shown in FIG. 8, in the all-optical switch of Prior Art 2, nonlinear waveguide elements 101 and 102 provided with an SOA are arranged in both arms of a Mach-Zehnder optical circuit. A light signal (NRZ light signal) 53 that is data-modulated in a non-return-to-zero format, and CW light 52 are inputted to this all-optical switch. In the process, the wavelength $\lambda_1$ of the NRZ light signal 53 and the wavelength $\lambda_2$ of CW light 52 are set in the gain range of the SOA.

After the NRZ light signal 53 is inputted to an input port 121 and bifurcated by a coupler 123, one branch of the signal is inputted to the nonlinear waveguide element 101, and the other branch of the signal is inputted to the nonlinear waveguide element 102. The bifurcation ratio in the coupler 123 is asymmetric, and the intensity of the light signal inputted to the nonlinear waveguide element 101 is greater than the intensity of the light signal inputted to the nonlinear waveguide element 102. Therefore, the change in the refractive index (nonlinear phase shift) in the nonlinear waveguide element 101 is greater than the change in refractive index in the nonlinear waveguide element 102. CW light 52 having wavelength $\lambda_2$ is also inputted to an input port 122, is bifurcated by the coupler 123, and is then caused to undergo the nonlinear phase shift that occurs in the nonlinear waveguide elements 101 and 102. CW light 52 that has passed through the nonlinear waveguide elements 101 and 102 is converted to NRZ data-modulated light by being re-multiplexed in a coupler 124, and is outputted as wavelength-converted light from an output port 125.

In this type of Mach-Zehnder optical circuit, setting is performed using phase adjusters 114 and 115 so that output light having wavelength $\lambda_2$ is not outputted from the output port 125 when an NRZ light signal 53 having wavelength $\lambda_1$ is not inputted. Specifically, when the NRZ light signal 53 is not inputted, setting is performed so that the phase difference is the half wavelength when CW light 52 having wavelength $\lambda_2$ that has passed through both arms interferes in the coupler 124. The bifurcation ratio in the coupler 123 is asymmetric, but in the case of CW light 52, both arms are predicted to have equal intensity due to gain saturation when CW light 52 passes through the SOA. The output in the initial state can be set to zero by providing an intensity adjuster directly in front of the coupler 124, by adjusting the bifurcation ratio of the coupler 124, and by adopting other measures.

In this all-optical switch of Prior Art 2, a change in the nonlinear refractive index occurs in both of the nonlinear waveguide elements 101 and 102 when the NRZ light signal 53 is inputted. Since CW light 52 having wavelength $\lambda_2$ that passes through both arms undergoes a different nonlinear phase shift, there is a change in the phase difference that occurs during interference in the coupler 124. The output of wavelength-converted light from the output port 125 thereby changes to the ON state. When the system is returned to a state in which no NRZ light signal 53 is inputted, the carrier density in the nonlinear waveguide elements is restored, and the output of the wavelength-converted light returns to the OFF state. The process in which the carrier density is restored and the change in nonlinear refractive index becomes relaxed is determined by the carrier life.

Input of an NRZ light signal to the nonlinear waveguide elements differs from input of an RZ light signal in that the change in carrier density in the process by which the input of the light signal switches from OFF to ON is also determined by the carrier life. When an NRZ light signal is inputted, the duration of the light signal is at least as long as a 1-bit time slot. Therefore, the carrier density in the nonlinear waveguide elements approaches a steady state while inputting of the light signal is continued, and the time constant is equal to the carrier life.

Patent document 1: Japanese Laid-open Patent Application Nos. 7-20510
Patent document 2: Japanese Laid-open Patent Application Nos. 7-199240
Patent document 3: Japanese Laid-open Patent Application Nos. 9-60440
Patent document 4: Japanese Laid-open Patent Application Nos. 2002-236272
non-Patent document 1: Kazuhito TAJIMA, "All-optical Switch-off Time Unrestricted by Carrier Lifetime," December 1993, Japanese *Journal of Applied Physics,* Vol. 32, pp. L1746-L1749
non-Patent document 2: F. Ratovelomanana (and 9 others), "An All-optical Wavelength Converter with Semiconductor Optical Amplifiers Monolithically Integrated in an Asymmetric Passive Mach-Zehnder Interferometer," October 1995, *IEEE Photonics Technology* Letters, Vol. 7, No. 10, pp. 992-994

DISCLOSURE OF THE INVENTION

PROBLEM WHICH THE INVENTION SHOULD SOLVE

However, the conventional techniques described above have the following drawbacks. Although an RZ signal tends to be used in high-bit-rate transfers in fiber-optic communication, an NRZ light signal is usually used more often. For this reason, in the all-optical switch of Prior Art 1 in which only activation by an RZ light signal is considered, the phase difference between both arms changes due to the change in refractive index caused by the RZ light signal in the nonlinear waveguide element 101, after which the phase difference between both of the arms returns to the initial state due to the change in refractive index caused by the RZ light signal in the nonlinear waveguide element 102. However, when the NRZ light signal instead of the RZ light signal is inputted to this all-optical switch, drawbacks occur in that since the light signal continues to be inputted to both the nonlinear waveguide element 101 and the nonlinear waveguide element 102 in a state in which the intensity of the light signal input is not zero, the changes in refractive index in both arms cancel each other out, and the output of wavelength-converted light changes to the OFF state.

The all-optical switch of Prior Art 2 that is driven by an NRZ light signal also suffers from the drawback of being difficult to operate at a high bit rate. In the all-optical switch of Prior Art 2, the carrier life determines both the change in carrier density in the process by which the light signal goes from OFF to ON, and the change in carrier density in the process by which the light signal goes from ON to OFF. Therefore, the waveform of the wavelength-converted output light is accompanied by a tailing in both the OFF-to-ON process and the OFF-to-ON process. Accordingly, when the carrier life is 100 picoseconds, an extremely large amount of waveform distortion occurs in the wavelength-converted output light when the switch is driven by a NRZ light signal having a bit rate in which the waveform changes in a shorter time, such as 10 Gb/second or 40 Gb/second.

The present invention was developed in view of these drawbacks, and an object thereof is to provide an all-optical switch capable of eliminating waveform distortion of the wavelength-converted output light dependent upon the carrier life, and of being driven by a high-bit-rate NRZ light signal.

MEANS TO SOLVE THE PROBLEM

The all-optical switch according to the present invention comprises a first input port to which a non-return-to-zero light signal is inputted; a second input port to which a carrier light is inputted; first and second light paths; a division unit for dividing the light inputted to the first and second input ports into the first and second light paths; a first nonlinear optical element provided to the first light path, into which one of the light signals among the light signals divided by the division unit and one of the carrier lights among the carrier lights divided by the division unit are inputted, for causing the refractive index to change in a nonlinear fashion according to the one light signal, and shifting the phase of the one carrier light in a nonlinear fashion; a second nonlinear optical element provided to the second light path, into which the other light signal among the light signals divided by the division unit and the other carrier light among the carrier lights divided by the division unit are inputted, for causing the refractive index to change in a nonlinear fashion according to the other light signal, and shifting the phase of the other carrier light in a nonlinear fashion; an attenuation unit for attenuating the other light signal inputted to the second nonlinear optical element below the one light signal inputted to the first nonlinear optical element; a delay unit for causing the other light signal to be inputted to the second nonlinear optical element after the one light signal is inputted to the first nonlinear optical element; and a synthesizer for synthesizing the light that has passed through the first and second light paths; wherein the time by which the inputting of the other light signal is delayed by the delay unit is shorter than the relaxation time of the nonlinear refractive index change in the first and second nonlinear optical elements.

In the present invention, the intensity of the light signal incident on the first and second nonlinear optical elements is changed by the attenuator, the amount of phase shift induced in the first and second nonlinear optical elements is changed, and the inputting of an NRZ light signal to the second nonlinear optical element is delayed by the delay unit with respect to the inputting of the NRZ light signal to the first nonlinear optical element. Therefore, the beginning of the tailing of the phase shift in the first nonlinear optical element is superposed on the rising and falling of the phase shift in the second nonlinear optical element, and the effects of the tailing in the phase shift can be efficiently cancelled out.

At this time, the time by which the inputting of the light signal to the second nonlinear optical element is delayed is made shorter than the carrier life or relaxation time of the change in refractive index. In this configuration, the phase shift induced in the first and second nonlinear optical elements by the inputting of the NRZ light signal varies, and output is therefore obtained without the phase difference in the first and second light paths returning to the initial state. When the NRZ light signal continues to be inputted, the amount of phase shift that occurs in each nonlinear optical element approaches a steady state over a period of time approximately equal to the carrier life. However, in this all-optical switch, the phase shift in the second nonlinear optical element is induced at about the time that the phase shift induced in the first nonlinear optical element begins to tail towards a steady state, making it possible for the effects of the tailing of the phase shift in the first nonlinear optical element to be cancelled out to some degree by the rising of the phase shift in the second nonlinear optical element. Furthermore, the amount of phase shift that occurs in each nonlinear optical element also relaxes to the initial state over a period of time approximately equal to the carrier life as the inputting of the NRZ light signal goes from ON to OFF. However, in this all-optical switch, the phase shift in the second nonlinear optical element also begins to relax at about the time that relaxation in the first nonlinear optical element begins to tail towards the initial state. It therefore becomes possible for the effects of the tailing of the phase shift in the first nonlinear optical element to be cancelled out to some degree by the relaxation of the phase shift in the second nonlinear optical element.

The first and second input ports may be arranged so that the propagation direction of the light signal is in the opposite direction from the propagation direction of the carrier light. In a configuration in which the carrier light and the NRZ light signal are propagated in opposite directions, operation becomes possible even when carrier light and the NRZ light signal have the same wavelength.

In this all-optical switch, not only may CW light be used as the carrier light, but clock light pulse that is synchronized with NRZ light signal may also be used. NRZ-RZ conversion becomes possible when clock light pulse is used as carrier light.

Furthermore, the delay unit may be formed by making the length of the light path from the division unit to the second nonlinear optical element in the second light path longer than the length of the light path from the division unit to the first nonlinear optical element in the first light path, for example.

EFFECT OF THE INVENTION

In the present invention, the switch can be operated without being affected by the relaxation time of the change in the nonlinear refractive index during the process in which the switch operation switches from OFF to ON or from ON to OFF, even when driven by a high-bit-rate NRZ light signal. Therefore, it becomes possible to operate with NRZ light signals having a wider range of bit rates than could be used by the conventional all-optical switch.

BRIEF DESCRIPTION OF THE DRAWINGS

FIG. 1 is a diagram showing the structure of the all-optical switch according to the first embodiment of the present invention;
FIG. 2A is a waveform diagram showing the pattern of the NRZ light signal inputted to the input port 7;
FIG. 2B is a waveform diagram showing the nonlinear phase shift in the nonlinear waveguide elements 1 and 2;
FIG. 2C is a waveform diagram showing the eye pattern of the intensity of the output light outputted from the output port 9;
FIG. 3 is a diagram showing the structure of the all-optical switch according to the second embodiment of the present invention;
FIG. 4 is a diagram showing the structure of the all-optical switch according to the third embodiment of the present invention;
FIG. 5 is a diagram showing the structure of the all-optical switch according to the fourth embodiment of the present invention;
FIG. 6 is a diagram showing the structure of the all-optical switch according to the fifth embodiment of the present invention;
FIG. 7 is a diagram showing the structure of the all-optical switch of Prior Art 1; and
FIG. 8 is a diagram showing the structure of the all-optical switch of Prior Art 2.

DESCRIPTION OF THE NUMERALS

1, 2, 101, 102; non-linear waveguide element
3-6, 10, 32-35, 37, 103-106, 110; 3 dB coupler
7, 8, 21, 22, 31, 32, 41, 42, 107, 108, 121, 122; input port 9, 25, 38, 45, 109, 125; output port
11, 111; variable delay circuit
12, 13, 112, 113; variable attenuator
14, 15, 114, 115; phase adjuster
23, 24, 43, 44, 123, 124; coupler
51; RZ light signal

52; CW light
53; NRZ light signal
54; clock light pulse

BEST MODE FOR CARRYING OUT THE INVENTION

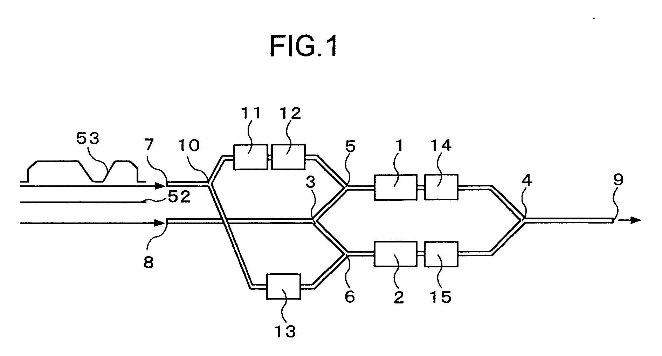

Embodiments of the all-optical switch according to the present invention will be described in detail hereinafter with reference to the accompanying drawings. The all-optical switch according to a first embodiment of the present invention will first be described. FIG. 1 is a diagram showing the structure of the all-optical switch of the present embodiment. As shown in FIG. 1, the all-optical switch of the present embodiment is provided with a Mach-Zehnder optical circuit that has a 3 dB coupler 10 for bifurcating a non-return-to-zero data-modulated light signal (NRZ light signal) 53 inputted from an input port 7; a 3 dB coupler 3 for bifurcating CW light 52 as carrier light inputted from an input port 8; a 3 dB coupler 5 into which one part of the light signal divided by the 3 dB coupler 10 and one part of CW light divided by the 3 dB coupler 3 are inputted; a 3 dB coupler 6 into which the other part of the light signal divided by the 3 dB coupler 10 and the other part of CW light divided by the 3 dB coupler 3 are inputted; and a 3 dB coupler 4 for synthesizing and outputting to an output port 9 the light outputted from the 3 dB coupler 5 and the light outputted from the 3 dB coupler 6.
In the all-optical switch of the present embodiment, a phase adjuster 14 and a nonlinear waveguide element 1 provided with an SOA are disposed between the 3 dB coupler 5 and the 3 dB coupler 4. A phase adjuster 15 and a nonlinear waveguide element 2 provided with an SOA are also disposed between the 3 dB coupler 6 and the 3 dB coupler 4. The nonlinear waveguide elements 1 and 2 change the refractive index of inputted light so as to be nonlinear, and output the result. The phase adjusters 14 and 15 ensure that the output light originating from CW light 52 is not outputted from the output port 9 when an NRZ light signal 53 is not inputted. The phase adjusters 14 and 15 are set so that the phase difference, at a time when the CW light that has passed through both arms interferes in the 3 dB coupler 4, is equal to half the wavelength when there is no input of the NRZ light signal 53.
Also in the all-optical switch of the present embodiment, a variable delay circuit 11 and a variable attenuator 12 are disposed between the 3 dB coupler 5 and the 3 dB coupler 10 to divide the inputted NRZ light signal 53; and a variable attenuator 13 is provided between the 3 dB coupler 10 and the 3 dB coupler 6. The variable delay circuit 11 delays the inputting of the other NRZ light signal so that after one of the NRZ light signals divided by the 3 dB coupler 10 is inputted to the nonlinear waveguide element 1, the other NRZ light signal is inputted to the nonlinear waveguide element 2. The variable delay circuit 11 is formed, for example, by making the light path from the 3 dB coupler 10 to the nonlinear waveguide element 2 longer than the light path from the 3 dB coupler 10 to the nonlinear waveguide element 1. The input time difference $\Delta T$ of the two NRZ light signals presented by the variable delay circuit 11 is also set so as to be shorter than the relaxation time of the nonlinear refractive index change; specifically the carrier life, in the nonlinear waveguide elements 1 and 2. The variable attenuators 12 and 13 attenuate the NRZ light signal inputted to the nonlinear waveguide element 2 to a level below that of the NRZ light signal inputted to the nonlinear waveguide element 1.
The all-optical switch of the present embodiment differs in constitution from the all-optical switch of Prior Art 1 shown in FIG. 7 in the following respects. An NRZ light signal is inputted instead of an RZ light signal; the input time difference $\Delta T$ of the light signals presented by the variable delay circuit 21 and inputted to the nonlinear waveguide elements 1 and 2 is shorter than the carrier life; and variable attenuators 12 and 13 are provided to ensure that the light signal inputted to the nonlinear waveguide element 1 has greater intensity than the signal inputted to the nonlinear waveguide element 2. The constituent elements of the all-optical switch of the present embodiment are also connected to each other by a commonly used optical waveguide.
The operation of the all-optical switch of the present embodiment will next be described. First, the NRZ light signal 53 having wavelength $\lambda_1$ is inputted to the input port 7, and CW light 52 having wavelength $\lambda_2$ is inputted to the input port 8. The wavelength $\lambda_1$ and the wavelength $\lambda_2$ are both set within the gain range of the SOA. The NRZ light signal 53 inputted to the input port 7 is bifurcated by the 3 dB coupler 10, and one of the resultant NRZ light signals passes in sequence through the variable delay circuit 11, the variable attenuator 12, and the 3 dB coupler 5 and is inputted to the nonlinear waveguide element 1. The other NRZ light signal passes through the variable attenuator 13 and the 3 dB coupler 6, and is inputted to the nonlinear waveguide element 2. A time difference of $\Delta T$ is then induced by the variable delay circuit 11 between the NRZ light signal inputted to the nonlinear waveguide element 1, and the NRZ light signal inputted to the nonlinear waveguide element 2. Specifically, the NRZ light signal is inputted to the nonlinear waveguide element 1, and after a time $\Delta T$ elapses, the NRZ light signal is inputted to the nonlinear waveguide element 2. The carrier density of the nonlinear waveguide elements 1 and 2 is then reduced by the inputted NRZ light signal, and the refractive index of the nonlinear waveguide elements 1 and 2 changes. On the other hand, after CW light 52 that has wavelength $\lambda_2$ and is inputted to the port 8 is bifurcated by the 3 dB coupler 13, a change in the refractive index (nonlinear phase shift) is undergone in each of the nonlinear waveguide elements 1 and 2. The CW light that has passed through the nonlinear waveguide elements 1 and 2 is then re-multiplexed by the 3 dB coupler 4, which functions as a synthesizer, and the CW light is converted to NRZ data-modulated light and is outputted as wavelength-converted light from the port 9.

In the all-optical switch of the present embodiment, when an NRZ light signal is inputted, and a change in the nonlinear refractive index is induced in the nonlinear waveguide element 1, CW light that has wavelength $\lambda_2$ and passes through the nonlinear waveguide element 1 undergoes a nonlinear phase shift, and the light output having wavelength $\lambda_2$ from the port 1 changes to the ON state. The amount of nonlinear phase shift at that time is preferably at least about $\pi/2$, or as close to $\pi$ as possible, until the time $\Delta T$ elapses. After time $\Delta T$, the NRZ light signal having wavelength $\lambda_1$ is also inputted to the nonlinear waveguide element 2, the carrier density is reduced and the refractive index is changed, and the CW light that has wavelength $\lambda_2$ and passes through the nonlinear waveguide element 2 also undergoes a nonlinear phase shift. At this time, the nonlinear phase shift in the nonlinear waveguide element 2 has the same sign as the nonlinear phase shift that occurred in the nonlinear waveguide element 1, and has a smaller value than the nonlinear phase shift of the nonlinear waveguide element 1. Both the nonlinear phase shift occurring in the nonlinear waveguide element 1 and the nonlinear phase shift occurring in the nonlinear waveguide element 2 have the same type of time shift. Therefore, by thus delaying the inputting of the NRZ light signal to the nonlinear waveguide element 2 by time $\Delta T$, the tailing portion that occurs once time $\Delta T$ has elapsed after the nonlinear phase shift in the nonlinear waveguide element 1 can be cancelled out. The tailing that occurs due to the carrier life is thereby suppressed in the process in which the light output having wavelength $\lambda_2$ switches from OFF to ON.

In the all-optical switch of the present embodiment, the tailing that occurs due to the carrier life can also be suppressed in the same manner in the process in which the input of the NRZ light signal having wavelength $\lambda_1$ switches from ON to OFF. Specifically, when the input of the NRZ light signal having wavelength $\lambda_1$ changes to the OFF state, the carrier density in the nonlinear waveguide element 1 is restored, and also approaches a steady state. The constant at that time is determined by the carrier life, and the time shift of the carrier density indicates the tailing. However, after time $\Delta T$ elapses, inputting of the light signal to the nonlinear waveguide element 2 changes to the OFF state, and the carrier density begins to be restored when the phase difference between both arms has nearly returned to the initial state. This restoration of the carrier density; specifically, the amount of nonlinear shift, indicates the same type of time shift in both the nonlinear waveguide element 1 and the nonlinear waveguide element 2. Accordingly, any subsequent change in the phase difference between both arms is suppressed, and there is no tailing effect of the carrier density change on the output of light having wavelength $\lambda_2$. Wavelength conversion is thus performed to input an NRZ light signal having wavelength $\lambda_1$ and to obtain NRZ output light having wavelength $\lambda_2$.

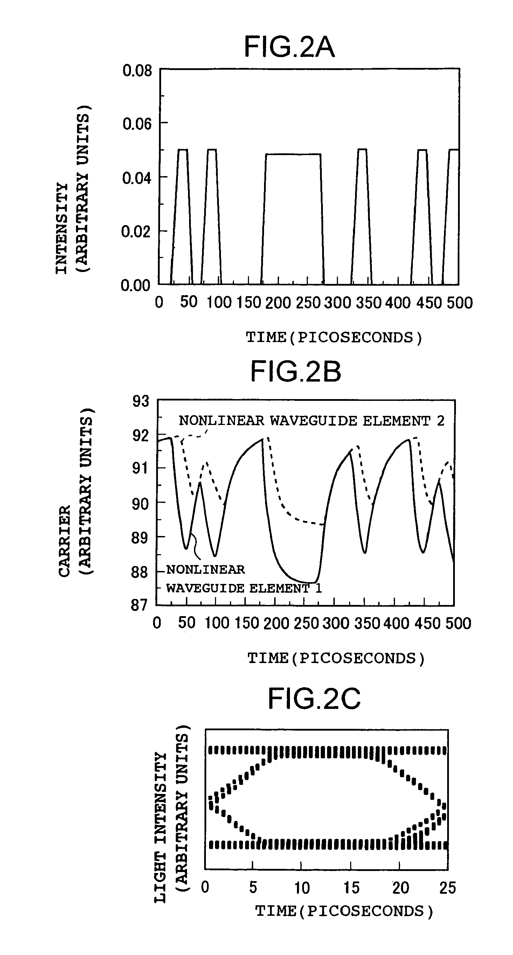

The operation of the all-optical switch of the present embodiment will next be described in detail by way of an example in which an NRZ light signal having a bit rate of 40 Gb/second is inputted to the input port 7, and the time difference $\Delta T$ is 12 picoseconds when an NRZ light signal adjusted by the variable delay circuit 11 is inputted to the nonlinear waveguide elements 1 and 2. FIG. 2A is a waveform diagram showing the pattern of the NRZ light signal inputted to the input port 7; FIG. 2B is a waveform diagram showing the nonlinear phase shift in the nonlinear waveguide elements 1 and 2; and FIG. 2C is a waveform diagram showing the eye pattern of the intensity of the output light outputted from the output port 9. This diagram is a waveform diagram. As shown in FIG. 2A, when "1" indicates a nonzero intensity for the light signal, and "0" indicates an intensity of zero for the light signal, the pattern of the NRZ signal inputted to the input port 7 becomes "01010001111001000101." This input waveform is designated as $S_{DATA,n}$ (t, z = 0). Herein, t indicates the time; z indicates the position in the length direction of the nonlinear waveguide element; z = 0 indicates the incident end of the waveguide; and z = L indicates the emission end of the waveguide. Also, n is 1 or 2, wherein n = 1 indicates the light signal intensity in the nonlinear waveguide element 1, and n = 2 indicates the light signal intensity in the nonlinear waveguide element 2. Furthermore, the intensity of CW light 52 that is inputted together with the NRZ light signal 53 is indicated by SCW, n(t, z = 0). The time shift of the carrier density $N_1$(t, z) and $N_2$(t, z) in the nonlinear waveguide elements 1 and 2 follows Eqs. 1 through 3 below.

[Eq. 1]

$$\frac{dN_n}{dt} = \frac{J_n}{ed} - \frac{N_n}{\tau} - A_g \times (N_n - N_0) \times \frac{S_{DATA,n}}{h\nu} - A_g \times (N_n - N_0) \times \frac{S_{CW,n}}{h\nu}$$

**[Eq. 2]**

$$\frac{dS_{DATA,n}}{dz} = \Gamma \times A_g \times (N_n - N_0) \times S_{DATA,n}$$

**[Eq. 3]**

$$\frac{dS_{CW,n}}{dz} = \Gamma \times A_g \times (N_n - N_0) \times S_{CW,n}$$

In the above Eqs. 1 through 3, $J_n$ is the injection current density; e is a unit of charge; $\tau$ is the carrier life in a state in which there is no light input; $A_g$ is the differential gain coefficient; No is the carrier density that generates gain; h is Planck's constant; $\nu$ is the optical frequency; and $\Gamma$ is the optical confinement coefficient.

The nonlinear phase shift $N_{tot,n(t)}$ in the nonlinear waveguide elements 1 and 2 shown in FIG. 2B is proportional to the change from a state in which there is no light signal input of the quantity obtained by integrating the carrier density $N_n(t, z)$ in the length direction in the nonlinear waveguide elements 1 and 2, and is found by Eq. 4 below.

**[Eq. 4]**

$$N_{tot,n}(t) = \int_0^L N_n(t,z)dz$$

The nonlinear phase shift $\phi_n(t)$ undergone by the CW light in the nonlinear waveguide elements 1 and 2 is given by Eq. 5 below.

**[Eq. 5]**

$$\phi_n(t) = k \times (N_{tot,n}(t) - M_{tot,n})$$

In Eq. 5 above, k is the proportionality constant; and $M_{tot,n}$ is the quantity obtained by integrating the carrier density in the length direction in the nonlinear waveguide element in a state in which there is no NRZ light signal input. Therefore, the intensity $S_{out}(t)$ of light that has wavelength $\lambda_2$ and is outputted from the all-optical switch of the present embodiment is given by Eq. 6 below.

**[Eq. 6]**

$$S_{out}(t) = \frac{1}{2}S_{CW,1}(t,z=L) + \frac{1}{2}S_{CW,2}(t,z=L)$$
$$+ \sqrt{S_{CW,1}(t,z=L) \times S_{CW,2}(t,z=L)} \times cos(\phi_1(t) - \phi_2(t) + \Delta\phi)$$

In Eq. 6 above, $\Delta\phi$ is the phase difference between both arms that is set by the phase adjusters 14 and 15. In the all-optical switch of the present embodiment, the nonlinear phase shift $\phi_1$(t) in the nonlinear waveguide element 1, and the nonlinear phase shift $\phi_2$(t) in the nonlinear waveguide element 2 are given the same time change by the same carrier life $\tau$. Furthermore, since the carrier density $N_{tot,2}$(t) in the nonlinear waveguide element 2 rises when the carrier density $N_{tot,1}$(t) in the nonlinear waveguide element 1 begins to tail, the tailing of the nonlinear phase shift $\phi_1$(t) can be cancelled out to a significant degree.

By this configuration, a satisfactory eye opening is obtained in the intensity $S_{out}$(t) of light outputted from the output port 9, as shown in FIG. 2C. Since the time difference $\Delta T$ when an NRZ light signal is inputted to the nonlinear waveguide elements 1 and 2 of both arms is also set to a value that corresponds to the relaxation time of the nonlinear refractive index change, there is no need to change the time difference $\Delta T$ according to the operating bit rate. Specifically, bit-rate-independent operation is possible by the same configuration.

As described above, in the all-optical switch of the present embodiment, the phase shift in the nonlinear waveguide element 2 is induced at about the time that the phase shift induced in the nonlinear waveguide element 1 starts to tail towards a steady state. Therefore, the effects of this tailing process on the phase shift in the nonlinear waveguide element 1 can be cancelled out to a certain extent by the rising of the phase shift in the nonlinear waveguide element 2. Since the phase shift in the nonlinear waveguide element 2 also begins to relax at about the time when relaxation in the nonlinear waveguide element 1 begins to tail towards the initial state, it becomes possible for the effects of this tailing process on the phase shift in the nonlinear waveguide element 1 to be cancelled out to a certain extent by the relaxation of the phase shift in the nonlinear waveguide element 2. This eliminates the distortion of the waveform of the wavelength-converted output light that is dependent on the carrier life, making it possible for the all-optical switch to be driven even by a high-bit-rate NRZ light signal.

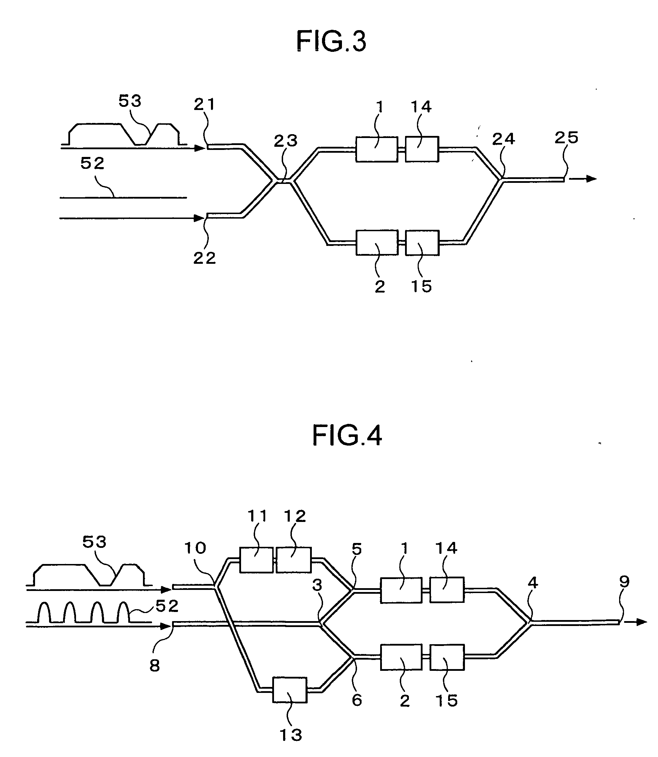

The all-optical switch according to a second embodiment of the present invention will next be described. FIG. 3 is a diagram showing the structure of the all-optical switch of the present embodiment. The same symbols are used in FIG. 3 to indicate constituent elements that are the same as those of the all-optical switch of the first embodiment shown in FIG. 1, and detailed description thereof is omitted. As shown in FIG. 3, the all-optical switch of the present embodiment is provided with a Mach-Zehnder optical circuit that has a coupler 23 for distributing to both arms the non-return-to-zero data-modulated light signal (NRZ light signal) 53 inputted from an input port 21, and also for distributing CW light 52 that is a carrier light inputted from an input port 22. The circuit also has a coupler 24 for synthesizing the light propagated through both arms and for outputting the light to an output port 25.

In this all-optical switch, the two arms in the aforementioned Mach-Zehnder optical circuit have different light path lengths. A phase adjuster 14 and a nonlinear waveguide element 1 provided with an SOA are disposed in the arm having the shorter light path; and a phase adjuster 15 and a nonlinear waveguide element 2 provided with an SOA are disposed in the arm having the longer light path. The phase adjusters 14 and 15 in the all-optical switch of the present embodiment ensure that the output light originating from CW light 52 is not outputted from the output port 25 when the NRZ light signal 53 is not inputted. The phase adjusters 14 and 15 are set so that the phase difference, at a time when the CW light that has passed through both arms interferes in the coupler 24, is equal to half the wavelength when there is no input of the NRZ light signal 53.

As described above, in the all-optical switch of the present embodiment, the arm to which the nonlinear waveguide element 2 is provided has a longer light path than the arm to which the nonlinear waveguide element 1 is provided. In this configuration, a time difference of $\Delta T$ can be imparted when the CW light that passes through the nonlinear waveguide elements 1 and 2 is multiplexed by the coupler 24. Therefore, a time difference $\Delta T$ that is shorter than the carrier life can be imparted to the CW light that passes through the nonlinear waveguide element 2. The all-optical switch of the present embodiment has the same constitution as the all-optical switch of Prior Art 2 shown in FIG. 8, except that the light paths of the two arms in the Mach-Zehnder optical circuit have different lengths.

The operation of the all-optical switch of the present embodiment will next be described. An NRZ light signal 53 having wavelength $\lambda_1$ is inputted to the input port 21, and CW light 52 having wavelength $\lambda_2$ is inputted to the input port 22. The wavelength $\lambda_1$ and the wavelength $\lambda_2$ are both set within the gain range of the SOA. The NRZ light signal 53 inputted to the input port 21 is bifurcated by the coupler 23, one of the resultant NRZ light signals is inputted to the nonlinear waveguide element 1, and the other resultant NRZ signal is inputted to the nonlinear waveguide element 2. This coupler 23 has an asymmetric bifurcation ratio so that the refractive index change (nonlinear phase shift) induced in the nonlinear waveguide element 1 becomes larger than the refractive index change induced in the nonlinear waveguide element 2. When the NRZ light signal is inputted, a nonlinear refractive index change is also induced in both the nonlinear waveguide elements 1 and 2. On the other hand, after being bifurcated by the coupler 23, CW light 52 inputted to the input port 22 undergoes a nonlinear phase shift created by the nonlinear waveguide elements 1 and 2. The CW light that has passed through the nonlinear waveguide elements 1 and 2 is then re-multiplexed by a coupler 34, and the CW light is converted to NRZ data-modulated light and is outputted as wavelength-converted light from the output port 25.

In the all-optical switch of the present embodiment, the light paths of the two arms in the Mach-Zehnder optical circuit are set so as to have different lengths. Therefore, a displacement equal to the time $\Delta T$ is created at the rising of the nonlinear phase shift when the light that has wavelength $\lambda_2$ and travels through both arms is multiplexed in the coupler 24. Specifically, the phase difference between both arms is first changed by the nonlinear phase shift of the light that has wavelength $\lambda_2$ and has passed through the nonlinear waveguide element 1, and the output of wavelength-converted light from the output port 25 changes to the ON state. Then, after time $\Delta T$ has elapsed, the nonlinear phase shift of the light that has wavelength $\lambda_2$ and has passed through the nonlinear waveguide element 2 cancels out the pulled-down portion. This portion occurs subsequent to time $\Delta T$ in the nonlinear phase shift of the light that has wavelength $\lambda_2$ and has passed through the nonlinear waveguide element 1. By this configuration, the tailing that is caused by the carrier life can be suppressed in the process in which the output of light having wavelength $\lambda_2$ switches from OFF to ON.

In the all-optical switch of the present embodiment, the tailing that is caused by the carrier life can also be suppressed in the same manner in the process in which the NRZ light signal having wavelength $\lambda_1$ switches from ON to OFF. Specifically, when the input of the light signal having wavelength $\lambda_1$ changes to the OFF state, the carrier density in the nonlinear waveguide elements 1 and 2 is restored and caused to approach a steady state. The constant at that time is determined by the carrier life, and the time shift of the carrier density indicates the tailing. However, the light paths of both arms have different lengths in the Mach-Zehnder optical circuit of this all-optical switch. Therefore, the phase difference between both arms first moves toward the initial state as the nonlinear phase shift of the light that has wavelength $\lambda_2$ and has passed through the nonlinear waveguide element 1 is gradually restored, and the output of wavelength-converted light from the output port 25 changes to the OFF state. When time $\Delta T$ elapses and the phase difference between both arms has nearly returned to the initial state, the nonlinear phase shift of the light that has wavelength $\lambda_2$ and has passed through the nonlinear waveguide element 2 is also restored. Accordingly, any subsequent change in the phase difference between both arms is suppressed, and there is no tailing effect of the carrier density change on the output of light having wavelength $\lambda_2$. Wavelength conversion is thus performed to input an NRZ light signal having wavelength $\lambda_1$ and to obtain NRZ output light having wavelength $\lambda_2$.

As described above, in the all-optical switch of the present embodiment, operation can be performed without being affected by the relaxation time of the change in the nonlinear refractive index during the process in which the switch operation switches from OFF to ON or from ON to OFF. Therefore, the all-optical switch can be driven even by a high-bit-rate NRZ light signal.

The all-optical switch according to a third embodiment of the present invention will next be described. FIG. 4 is a diagram showing the structure of the all-optical switch of the present embodiment. The same symbols are used in FIG. 4 to indicate constituent elements that are the same as those of the all-optical switch of the first embodiment shown in FIG. 1, and detailed description thereof is omitted. As shown in FIG. 4, the all-optical switch of the present embodiment is the same as the all-optical switch of the first embodiment shown in FIG. 1, except that a clock light pulse 54 is inputted instead of CW light to the input port 8, and light that is converted from NRZ to RZ is outputted from the output port 9. Accordingly, the switching window for the clock light pulse 54 is the same as the switch output waveform for CW light in the all-optical switch of the aforementioned first embodiment.

The operation of the all-optical switch of the present embodiment will next be described. In the all-optical switch of the present embodiment, an NRZ light signal 53 having wavelength $\lambda_1$ is inputted to the input port 7, and a clock light pulse 54 that has wavelength $\lambda_2$ and is synchronized with the NRZ light signal 53 is inputted to the input port 8. The wavelength $\lambda_1$ and the wavelength $\lambda_2$ are both set within the gain range of the SOA. The NRZ light signal 53 inputted to the input port 7 is bifurcated by the 3 dB coupler 10, and one of the resultant NRZ light signals passes in sequence through the variable delay circuit 11, the variable attenuator 12, and the 3 dB coupler 5 and is inputted to the nonlinear waveguide element 1. The other NRZ light signal passes in sequence through the variable attenuator 13 and the 3 dB coupler 6, and is inputted to the nonlinear waveguide element 2. By adjusting the variable delay circuit 11 at this time, a time difference of $\Delta T$ is imparted to the light signals inputted to the nonlinear waveguide elements 1 and 2. The nonlinear waveguide elements 1 and 2 undergo a reduction in carrier density and a change in refractive index when this NRZ light signal is inputted. On the other hand, after the clock light pulse 54 having wavelength $\lambda_2$ inputted to the input port 8 is temporarily bifurcated by the 3 dB coupler 3, one part of the pulse is inputted to the nonlinear waveguide element 1, the other part of the pulse is inputted to the nonlinear waveguide element 2, and a change in refractive index (nonlinear phase shift) is undergone. The clock light pulse that has passed through the nonlinear waveguide elements 1 and 2 is then re-multiplexed by the 3 dB coupler 4, and the clock light pulse is converted to RZ data-modulated light and is outputted as wavelength-converted light from the port 9.

In this Mach-Zehnder optical circuit, the phase adjusters 14 and 15 are set so that the output light having wavelength $\lambda_2$ is not outputted from the output port 9 when an NRZ light signal 53 having wavelength $\lambda_1$ is not inputted. The phase adjusters 14 and 15 are also set so that the phase difference, at a time when the clock light that has wavelength $\lambda_2$ and has passed through both arms interferes in the 3 dB coupler 4, is equal to half the wavelength when the NRZ light signal having wavelength $\lambda_1$ is not inputted.

In the all-optical switch of the present embodiment, when the NRZ light signal 53 is inputted, the NRZ light signal is first inputted to the nonlinear waveguide element 1, and an NRZ light signal having a lower intensity than the NRZ light signal inputted to the nonlinear waveguide element 1 is inputted to the nonlinear waveguide element 2 after time $\Delta T$ has elapsed. By this configuration, the tailing portion of the nonlinear refractive index change in the nonlinear waveguide element 1 is cancelled out by the nonlinear refractive index change in the nonlinear waveguide element 2 in the process in which the switching window changes to the ON state. Specifically, the tailing caused by the carrier life is suppressed in the operation whereby the clock light pulse having wavelength $\lambda_2$ changes to the ON state.

The tailing caused by the carrier life is also suppressed in the same manner in the process in which the inputting of the NRZ light signal having wavelength $\lambda_1$ switches from ON to OFF. Specifically, when inputting of the NRZ light signal having wavelength $\lambda_1$ changes to the OFF state, the carrier density in the nonlinear waveguide element 1 is restored and caused to approach a steady state. The constant at that time is determined by the carrier life, and the time shift of the carrier density indicates the tailing. However, after time $\Delta T$ elapses, inputting of the light signal to the nonlinear waveguide element 2 changes to the OFF state, and the carrier density begins to be restored when the phase difference between both arms has nearly returned to the initial state. Accordingly, any subsequent change in the phase difference between both arms is suppressed, and there is no tailing effect of the carrier density change in the operation whereby the clock light pulse having wavelength $\lambda_2$ changes to the OFF state. Wavelength conversion is thus performed to input an NRZ light signal having wavelength $\lambda_1$ and to obtain an RZ output light having wavelength $\lambda_2$ in the all-optical switch of the present embodiment.

As described above, even when a clock light pulse is inputted as the carrier light in the all-optical switch of the present embodiment, operation can be performed without being affected by the relaxation time of the change in the nonlinear refractive index during the process in which the switch operation switches from OFF to ON or from ON to OFF. As a result, it becomes possible to operate with NRZ light signals having a wider range of bit rates than could be used by the conventional all-optical switch.

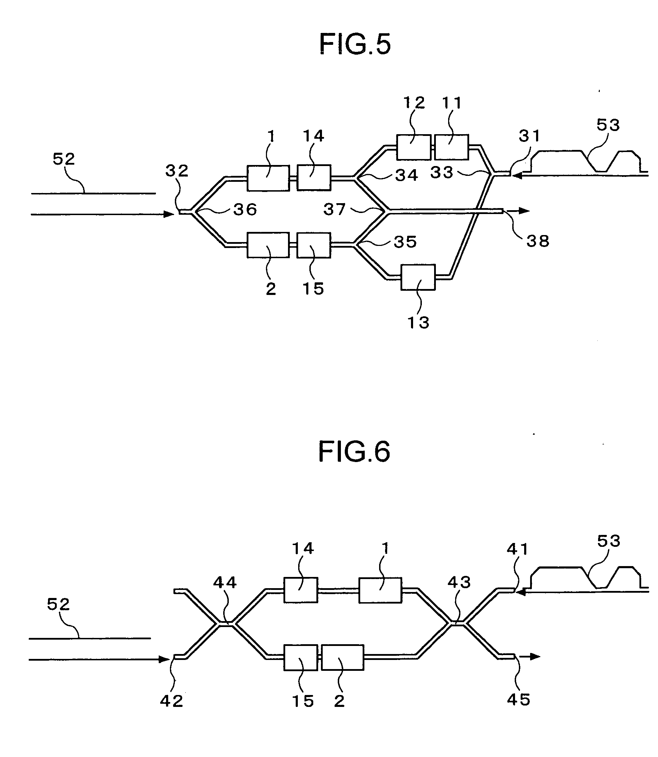

The propagation direction of the NRZ light is the same as the propagation direction of CW light, the clock light pulse, and other types of carrier light in the all-optical switches of the first through third embodiments, but the present invention is not limited by this configuration, and the same effects are obtained even when the NRZ light and the carrier light are propagated in opposite directions. In this case, the NRZ light signal and the carrier light may have the same wavelength. The all-optical switch according to a fourth embodiment of the present invention will next be described. FIG. 5 is a diagram showing the structure of the all-optical switch of the present embodiment. The same symbols are used in FIG. 5 to indicate constituent elements that are the same as those of the all-optical switch of the first embodiment shown in FIG. 1, and detailed description thereof is omitted. As shown in FIG. 5, the all-optical switch of the present embodiment is provided with a Mach-Zehnder optical circuit that has a 3 dB coupler 33 for bifurcating a non-return-to-zero data-modulated light signal (NRZ light signal) 53 inputted from an input port 31; a 3 dB coupler 36 for bifurcating CW light 52 that is a carrier light inputted from an input port 8; a 3 dB coupler 34 into which one part of the NRZ light signal divided by the 3 dB coupler 33 and one part of the CW light divided by the 3 dB coupler 36 are inputted; a 3 dB coupler 35 into which the other part of the NRZ light signal divided by the 3 dB coupler 33 and the other part of the CW light divided by the 3 dB coupler 36 are inputted; and a 3 dB coupler 37 for synthesizing and outputting to an output port 38 the light outputted from the 3 dB coupler 34 and the light outputted from the 3 dB coupler 35.

In the all-optical switch of the present embodiment, the input port 31 and the input port 32 are arranged so that the propagation direction of the NRZ light signal 53 is in the opposite direction from the propagation direction of CW light 52 in the aforementioned Mach-Zehnder optical circuit. A phase adjuster 14 and a nonlinear waveguide element 1 provided with an SOA are disposed between the 3 dB coupler 36 and the 3 dB coupler 34. A phase adjuster 15 and a nonlinear waveguide element 2 provided with an SOA are also disposed between the 3 dB coupler 36 and the 3 dB coupler 35. These phase adjusters 14 and 15 are set so that the output light originating from CW light 52 is not outputted from the output port 389 when the NRZ light signal 53 is not inputted. The phase adjusters 14 and 15 are also set so that the phase difference, at a time when the CW light that has passed through both arms interferes in the 3 dB coupler 4, is equal to half the wavelength when there is no input of the NRZ light signal 53.

Also in the all-optical switch of the present embodiment, a variable delay circuit 11 and a variable attenuator 12 are disposed between the 3 dB coupler 33 and the 3 dB coupler 34 for dividing the inputted NRZ light signal 53; and a variable attenuator 13 is provided between the 3 dB coupler 33 and the 3 dB coupler 35. The variable delay circuit 11 delays the inputting of the other NRZ light signal so that after one of the NRZ light signals divided by the 3 dB coupler 33 is inputted to the nonlinear waveguide element 1, and the other NRZ light signal is inputted to the nonlinear waveguide element 2. The input time difference $\Box T$ of the two NRZ light signals presented by the variable delay circuit 11 is also set so as to be shorter than the relaxation time of the nonlinear refractive index change; specifically, the carrier life, in the nonlinear waveguide elements 1 and 2. The variable attenuators 12 and 13 attenuate the NRZ light signal inputted to the nonlinear waveguide element 2 to a level below that of the NRZ light signal inputted to the nonlinear waveguide element 1. Aspects of the constitution of the all-optical switch of the present embodiment other than those described above are the same as in the all-optical switch of the aforementioned first embodiment.

The operation of the all-optical switch of the present embodiment will next be described. In the all-optical switch of the present embodiment, an NRZ light signal 53 having wavelength $\lambda_1$ is inputted to the input port 31, and CW light 52 having wavelength $\lambda_2$ is inputted to the input port 32. The wavelength $\lambda_1$ and the wavelength $\lambda_2$ are both set within the gain range of the SOA. The NRZ light signal 53 that has wavelength $\lambda_1$ and is inputted to the input port 31 is bifurcated by the 3 dB coupler 33, and one of the resultant NRZ light signals passes in sequence through the variable delay circuit 11, the variable attenuator 12, the 3 dB coupler 34, and the phase adjuster 14, and is inputted to the nonlinear waveguide element 1. The other NRZ light signal passes through the variable attenuator 13, the 3 dB coupler 35, and the phase adjuster 15, and is inputted to the nonlinear waveguide element 2. A time difference of $\Delta T$ is then induced by the variable delay circuit 11 in the NRZ light signal inputted to the nonlinear waveguide elements 1 and 2. When the NRZ light signal is inputted to the nonlinear waveguide elements 1 and 2, the carrier density is reduced, and the refractive index changes.

On the other hand, after CW light 52 that has wavelength $\lambda_2$ and is inputted to the input port 32 is temporarily bifurcated by the 3 dB coupler 36, one part of the light is inputted to the nonlinear waveguide element 1, the other part of the light is inputted to the nonlinear waveguide element 2, and a change in refractive index (nonlinear phase shift) is undergone in the nonlinear waveguide elements 1 and 2. The CW light and the NRZ light signal at this time are propagated in opposite directions in the nonlinear waveguide elements 1 and 2. The CW light that has passed through the nonlinear waveguide elements 1 and 2 is then re-multiplexed by the 3 dB coupler 37, and the CW light is converted to NRZ data-modulated light and is outputted as wavelength-converted light from the port 38.

In the all-optical switch of the present embodiment, when an NRZ light signal is inputted and a change in the nonlinear refractive index is induced in the nonlinear waveguide element 1, CW light that has wavelength $\lambda_2$ and passes through the nonlinear waveguide element 1 undergoes a nonlinear phase shift, and the light output having wavelength $\lambda_2$ from the output port 38 changes to the ON state. The amount of this nonlinear phase shift in the nonlinear waveguide element 1 is preferably at least about $\pi/2$, or as close to $\pi$ as possible, until the time $\Delta T$ elapses. When time $\Delta T$ has elapsed after the inputting of the NRZ light signal to the nonlinear waveguide element 1, the NRZ light signal having wavelength $\lambda_1$ is also inputted to the nonlinear waveguide element 2, the carrier density of the nonlinear waveguide element 2 is reduced, and the refractive index thereof also changes. By this configuration, CW light that has wavelength $\lambda_2$ and passes through the nonlinear waveguide element 2 also undergoes a nonlinear phase shift. The nonlinear phase shift in the nonlinear waveguide element 2 has the same sign as the nonlinear phase shift that occurred in the nonlinear waveguide element 1, and is smaller than the nonlinear phase shift of the nonlinear waveguide element 1. The tailing portion that occurs once time $\Delta T$ has elapsed after the nonlinear phase shift in the nonlinear waveguide element 1 can thereby be cancelled out. As a result, the tailing caused by the carrier life is suppressed in the process in which the light output having wavelength $\lambda_2$ switches from OFF to ON.

In the all-optical switch of the present embodiment, the tailing caused by the carrier life can also be suppressed in the same manner in the process in which the input of the NRZ light signal having wavelength $\lambda_1$ switches from ON to OFF. Specifically, when the input of the NRZ light signal having wavelength $\lambda_1$ changes to the OFF state, the carrier density in the nonlinear waveguide element 1 is restored and caused to approach a steady state. The constant at that time is determined by the carrier life, and the time shift of the carrier density is indicative of the tailing. However, after time $\Delta T$ elapses, inputting of the NRZ light signal to the nonlinear waveguide element 2 changes to the OFF state, and the carrier density begins to be restored when the phase difference between both arms has nearly returned to the initial state. Accordingly, any subsequent change in the phase difference between both arms is suppressed, and there is no tailing effect of the carrier density change on the output of light having wavelength $\lambda_2$. Wavelength conversion is thus performed to input an NRZ light signal having wavelength $\lambda_1$ and to obtain NRZ output light having wavelength $\lambda_2$.

Also in the all-optical switch of the present embodiment, NRZ-RZ-converted light can be outputted by inputting a clock light pulse instead of the CW light.

The all-optical switch according to a fifth embodiment of the present invention will next be described. FIG. 6 is a diagram showing the structure of the all-optical switch of the present embodiment. The same symbols are used in FIG. 6 to indicate constituent elements that are the same as those of the all-optical switch of the second embodiment shown in FIG. 3, and detailed description thereof is omitted. As shown in FIG. 6, the all-optical switch of the present embodiment is provided with a Mach-Zehnder optical circuit that has a coupler 43 for distributing to both arms a non-return-to-zero data-modulated light signal (NRZ light signal) 53 inputted from an input port 41, and a coupler 44 for distributing to both arms CW light 52 inputted from an input port 42. In this Mach-Zehnder optical circuit, the input port 41 and the input port 42 are arranged so that the propagation direction of the NRZ light signal 53 is in the opposite direction from the propagation direction of CW light 52. CW light 52 that has passed through both arms is synthesized by the coupler 43 and outputted to an output port 45.

In this all-optical switch, one of the arms among the two arms in the aforementioned Mach-Zehnder optical circuit is provided with a phase adjuster 14 and a nonlinear waveguide element 1 that has an SOA, and the other arm is provided with a phase adjuster 15 and a nonlinear waveguide element 2 that has an SOA. The nonlinear waveguide element 1 and the nonlinear waveguide element 2 are also arranged so that the length of the light path to the coupler 43 in each element is different for each element. Specifically, the nonlinear waveguide elements are arranged so that the light path length $L_1$ from the coupler 43 to the nonlinear waveguide element 1 is shorter than the light path length $L_2$ from the coupler 43 to the nonlinear waveguide element 2. Furthermore, in the all-optical switch of the present embodiment, the bifurcation ratio in the coupler 43 is asymmetric so that the refractive index change (nonlinear phase shift) induced in the nonlinear waveguide element 1 is greater than the refractive index change induced in the nonlinear waveguide element 2. The phase adjusters 14 and 15 in the all-optical switch of the present embodiment are also set so that the output light originating from CW light 52 is not outputted from the output port 45 when the NRZ light signal 53 is not inputted, and so that the phase difference, at a time when the CW light that has passed through both arms interferes in the coupler 43, is equal to half the wavelength when there is no input of the NRZ light signal 53. Aspects of the constitution of the all-optical switch of the present embodiment other than those described above are the same as in the all-optical switch of the aforementioned second embodiment.

The operation of the all-optical switch of the present embodiment will next be described. In the all-optical switch of the present embodiment, an NRZ light signal 53 having wavelength $\lambda_1$ is inputted to the input port 41, and CW light 52 having wavelength $\lambda_2$ is inputted to the input port 42. The wavelength $\lambda_1$ and the wavelength $\lambda_2$ are both set within the gain range of the SOA. After the NRZ light signal 53 inputted to the input port 41 is distributed to both arms by the coupler 43, one part of the signal is inputted to the nonlinear waveguide element 1, and the other part of the signal is inputted to the nonlinear waveguide element 2. A change in the nonlinear refractive index is thereby induced in both of the nonlinear waveguide elements 1 and 2. In this all-optical switch, the light path length $L_1$ from the coupler 43 to the nonlinear waveguide element 1 is shorter than the light path length $L_2$ from the coupler 43 to the nonlinear waveguide element 2, and the bifurcation ratio in the coupler 43 is asymmetric. Therefore, the refractive index change (nonlinear phase shift) induced in the nonlinear waveguide element 1 becomes greater than the refractive index change induced in the nonlinear waveguide element 2.

On the other hand, after CW light 52 that has wavelength $\lambda_2$ and is inputted to the input port 42 is distributed to both arms by the coupler 44, one part of the light is inputted to the phase nonlinear waveguide element 1 via the phase adjuster 14, and the other part of the light is inputted to the phase nonlinear waveguide element 2 via the phase adjuster 15. A nonlinear phase shift is then undergone in the phase nonlinear waveguide elements 1 and 2. The CW light and the NRZ light signal at this time are propagated in opposite directions in the nonlinear waveguide elements 1 and 2. The CW light that has passed through the nonlinear waveguide elements 1 and 2 is then re-multiplexed by the coupler 43, and the CW light is converted to NRZ data-modulated light and is outputted as wavelength-converted light from the output port 45.

In the all-optical switch of the present embodiment, the light path length $L_1$ from the coupler 43 to the nonlinear waveguide element 1 is shorter than the light path length $L_2$ from the coupler 43 to the nonlinear waveguide element 2. Therefore, when light that has wavelength $\lambda_2$ and has passed through both arms is multiplexed in the coupler 43, a displacement of time $\Delta T = (L_2 - L_1)/v_g$ occurs at the rising of the nonlinear phase shift. Herein, $v_g$ is the group velocity. Specifically, the phase difference between both arms is first changed by the nonlinear phase shift of the light that has wavelength $\lambda_2$ and has passed through the nonlinear waveguide element 1, and the output of wavelength-converted light from the output port 45 changes to the ON state. Then, after time $\Delta T$ has elapsed, the nonlinear phase shift of the light that has wavelength $\lambda_2$ and has passed through the nonlinear waveguide element 2 cancels out the tailing portion that occurs subsequent to time $\Delta T$ in the nonlinear phase shift of the light that has wavelength $\lambda_2$ and has passed through the nonlinear waveguide element 1. By this configuration, the tailing caused by the carrier life is suppressed in the process in which the output of light having wavelength $\lambda_2$ switches from OFF to ON.

In the all-optical switch of the present embodiment, the tailing that is caused by the carrier life can also be suppressed in the same manner in the process in which the input of the light signal having wavelength $\lambda_1$ switches from ON to OFF. When the input of the light signal having wavelength $\lambda_1$ changes to the OFF state in this all-optical switch, the carrier density in the nonlinear waveguide elements 11 and 12 is restored and caused to approach a steady state. The constant at that time is determined by the carrier life, and the time shift of the carrier density indicates the tailing. However, since the light paths of both arms have different lengths, the phase difference between both of the arms first moves toward the initial state as the nonlinear phase shift of the light that has wavelength $\lambda_2$ and has passed through the nonlinear waveguide element 1 is gradually restored, and the output of wavelength-converted light from the output port 45 changes to the OFF state. After time $\Delta T$ has elapsed, the phase shift between both of the arms nearly returns to the initial state, whereupon the nonlinear phase shift of the light that has wavelength $\lambda_2$ and has passed through the nonlinear waveguide element 2 is also gradually restored. Accordingly, any subsequent change in the phase difference between both of the arms is suppressed, and there is no tailing effect of the carrier density change on the output of light having wavelength $\lambda_2$. Wavelength conversion is thus performed to input an NRZ light signal 53 having wavelength $\lambda_1$ and to obtain NRZ output light having wavelength $\lambda_2$ in the all-optical switch of the present embodiment.

Also in the all-optical switch of the present embodiment, NRZ-RZ-converted light can be outputted by inputting a clock light pulse instead of CW light.

Configurations are adopted in the all-optical switches of the first through sixth embodiments whereby light signals having different intensities are inputted to the nonlinear waveguide elements of both arms so as to cause a different nonlinear phase shift to occur in both arms. However, when an SOA is used as a nonlinear waveguide element, the following methods can be used to cause a different nonlinear phase shift to occur in both arms: a method for using an SOA having a different phase shift and gain change ratio (alpha parameter), a method for using an SOA having a different differential gain coefficient, a method for using an SOA having a different amount of injection current, a method for using an SOA having a different optical confinement coefficient, or the like.

Furthermore, the Mach-Zehnder optical circuit provided with a nonlinear waveguide element in both arms in the all-optical switch of the first through sixth embodiments may be monolithically integrated on a semiconductor, or a semiconductor nonlinear waveguide element may be hybrid-integrated in a flat optical circuit made from a quartz-based material or other material. A combination of discrete optical components may also be used.

INDUSTRIAL APPLICABILITY

The present invention may be used as a wavelength conversion device for use in fiber-optic communication and optical information processing.

**Claims**

1. An all-optical switch **characterized in** comprising:

   a first input port to which a non-return-to-zero light signal is inputted;
   a second input port to which a carrier light is inputted;
   first and second light paths;
   a division unit for dividing the light inputted to said first and second input ports into said first and second light paths;
   a first nonlinear optical element provided to said first light path, into which one of the light signals among the light signals divided by said division unit and one of the carrier lights among the carrier lights divided by said division unit are inputted, for causing the refractive index to change in nonlinear fashion according to said one light signal, and shifting the phase of said one carrier light in a nonlinear fashion;
   a second nonlinear optical element provided to said second light path, into which the other light signal among the light signals divided by said division unit and the other carrier light among the carrier lights divided by said division unit are inputted, for causing the refractive index to change in nonlinear fashion according to said other light signal, and shifting the phase of said other carrier light in a nonlinear fashion;
   an attenuation unit for attenuating said other light signal inputted to said second nonlinear optical element below said one light signal inputted to said first nonlinear optical element;
   a delay unit for causing said other light signal to be inputted to said second nonlinear optical element after said one light signal is inputted to said first nonlinear optical element; and
   a synthesizer for synthesizing the light that has passed through said first and second light paths; wherein
   the time by which the inputting of said other light signal is delayed by said delay unit is shorter than the relaxation time of the nonlinear refractive index change in said first and second nonlinear optical elements.

2. The all-optical switch according to claim 1, **characterized in that** said first and second input ports are arranged so that the propagation direction of said light signal is in the opposite direction from the propagation direction of said carrier light.

3. The all-optical switch according to claim 1 or 2, **characterized in that** said carrier light is unmodulated, continuous light.

4. The all-optical switch according to claim 1 or 2, **characterized in that** said carrier light is a clock light pulse that is synchronized with said light signal.

5. The all-optical switch according to any one of claims 1 through 4, **characterized in that** said delay unit is formed by making the length of the light path from said division unit to said second nonlinear optical element in said second light path longer than the length of the light path from said division unit to said first nonlinear optical element in said first light path.

EP 1 662 307 A1

FIG.1

## FIG.2A

INTENSITY (ARBITRARY UNITS)

TIME (PICOSECONDS)

## FIG.2B

CARRIER (ARBITRARY UNITS)

NONLINEAR WAVEGUIDE ELEMENT 2

NONLINEAR
WAVEGUIDE ELEMENT 1

TIME (PICOSECONDS)

## FIG.2C

LIGHT INTENSITY (ARBITRARY UNITS)

TIME (PICOSECONDS)

# FIG.3

# FIG.4

# FIG.5

# FIG.6

# FIG.7

# FIG.8

**INTERNATIONAL SEARCH REPORT**

| International application No. |
| --- |
| PCT/JP2004/011597 |

A. CLASSIFICATION OF SUBJECT MATTER
   Int.Cl⁷ G02F2/02, G02F1/365

According to International Patent Classification (IPC) or to both national classification and IPC

B. FIELDS SEARCHED

Minimum documentation searched (classification system followed by classification symbols)
   Int.Cl⁷ G02F2/02, G02F1/365

Documentation searched other than minimum documentation to the extent that such documents are included in the fields searched
   Jitsuyo Shinan Koho        1922-1996   Toroku Jitsuyo Shinan Koho   1994-2004
   Kokai Jitsuyo Shinan Koho   1971-2004   Jitsuyo Shinan Toroku Koho   1996-2004

Electronic data base consulted during the international search (name of data base and, where practicable, search terms used)
   JSTPlus(JOIS)

C. DOCUMENTS CONSIDERED TO BE RELEVANT

| Category* | Citation of document, with indication, where appropriate, of the relevant passages | Relevant to claim No. |
| --- | --- | --- |
| A | JP 2003-506726 A   (Alcatel),<br>18 February, 2003 (18.02.03),<br>Full text; all drawings<br>& WO 01/10045 A2        & EP 1145446 A<br>& CA 2345371 A          & FR 2797331 A<br>& US 662885 B1 | 1-5 |
| A | JP 2003-57695 A   (Nippon Telegraph And Telephone Corp.),<br>26 February, 2003 (26.02.03),<br>Full text; all drawings<br>& EP 1191387 A2        & US 2002-101293 A1 | 1-5 |

| ☒ Further documents are listed in the continuation of Box C. | ☐ See patent family annex. |
| --- | --- |

* Special categories of cited documents:
"A"  document defining the general state of the art which is not considered to be of particular relevance
"E"  earlier application or patent but published on or after the international filing date
"L"  document which may throw doubts on priority claim(s) or which is cited to establish the publication date of another citation or other special reason (as specified)
"O"  document referring to an oral disclosure, use, exhibition or other means
"P"  document published prior to the international filing date but later than the priority date claimed

"T"  later document published after the international filing date or priority date and not in conflict with the application but cited to understand the principle or theory underlying the invention
"X"  document of particular relevance; the claimed invention cannot be considered novel or cannot be considered to involve an inventive step when the document is taken alone
"Y"  document of particular relevance; the claimed invention cannot be considered to involve an inventive step when the document is combined with one or more other such documents, such combination being obvious to a person skilled in the art
"&"  document member of the same patent family

| Date of the actual completion of the international search<br>   09 November, 2004 (09.11.04) | Date of mailing of the international search report<br>   22 November, 2004 (22.11.04) |
| --- | --- |
| Name and mailing address of the ISA/<br>   Japanese Patent Office | Authorized officer |
| Facsimile No. | Telephone No. |

Form PCT/ISA/210 (second sheet) (January 2004)

<div align="center">

**INTERNATIONAL SEARCH REPORT**

</div>

| | International application No. |
|---|---|
| | PCT/JP2004/011597 |

C (Continuation).   DOCUMENTS CONSIDERED TO BE RELEVANT

| Category* | Citation of document, with indication, where appropriate, of the relevant passages | Relevant to claim No. |
|---|---|---|
| T | Shigeru NAKAMURA, "Shinki Dosa Joken o Donyu shita Taisho Mach-Zender-gata Switch ni yoru Bit Rate Muizon NRZ Zenhikarihacho Henkan to Sono Shutsuryoku Hikari Denso Tokusei", The Institute of Electronics, Information and Communication Engineers, 27 May, 2004 (27. 05.04), Vol.104, No.80 (CS2004 1-16), pages 5 to 10 | 1-5 |

Form PCT/ISA/210 (continuation of second sheet) (January 2004)